# EUROPÄISCHE PATENTANMELDUNG

(11) **EP 0 881 323 A1**
(43) Veröffentlichungstag der Anmeldung: **02.12.1998**
(21) Anmeldenummer: 97114779.8
(22) Anmeldetag: 26.08.1997
(51) Int. Cl.: D06M 23/08, D06M 15/03

(54) **Mit einem wasserblockierenden Mittel beschichtetes Substrat sowie Verfahren zu dessen Herstellung**

(30) Priorität: 26.05.1997 EP 97108489
(71) Anmelder: ROBLON A/S, DK-9900 Frederikshavn (DK)
(72) Erfinder: Olesen, John, 9900 Frederikshavn (DK); Jorgensen, Jorgen, 9900 Frederikshavn (DK)
(74) Vertreter: Morgan, James G.

(57) **Zusammenfassung**

Ein Substrat wie insbesondere eine Faser, ein Faserstoff oder eine Folie ist mit einem Klebstoff imprägniert und an seiner Oberfläche mit einem pulverförmigen wasserblockierenden Mittel beschichtet, das durch den Klebstoff an der Substratoberfläche festgelegt ist. Entsprechend wird bei einem Verfahren zum Behandeln von Substraten wie insbesondere einer Faser, eines Faserstoffes oder einer Folie mit einem wasserblockierenden Mittel das Substrat mit einem Klebstoff imprägniert und anschließend das wasserblockierende Mittel in Pulverform auf die Substratoberfläche aufgebracht, an der es aufgrund des Klebstoffs haften bleibt.

## Beschreibung

Die Erfindung betrifft ein Substrat wie insbesondere eine Faser, einen Faserstoff oder eine Folie, das an seiner Oberfläche mit einem wasserblockierenden Mittel beschichtet ist. Sie betrifft ferner ein Verfahren zum Behandeln von Substraten wie insbesondere einer Faser, eines Faserstoffes oder einer Folie mit einem wasserblockierenden Mittel.

Es sind bereits mehrere Verfahren zur Behandlung von Substraten mit wasserblockierenden Mitteln bekannt. Es werden insbesondere Fasern oder Faserstoffe mit Mitteln imprägniert, die Wasser absorbieren, um zum Beispiel in Kabeln Wasser daran zu hindern, in Längsrichtung der Fasern zu wandern.

Bei einem beispielsweise aus der EP-A-0 351 100 bekannten Verfahren erfolgt eine Behandlung von Substraten mit wasserblockierenden Mitteln in einem wässrigen Medium. Dieses Verfahren weist den Nachteil auf, daß die Viskosität der wässrigen Dispersionen sehr hoch wird.

In der EP-A-0 666 243 wird ein Verfahren vorgeschlagen, bei dem Glasfaserbündel mit einer Suspension eines wasserabsorbierenden Mittels in einem Öl behandelt werden. Als wasserabsorbierendes Mittel wird Polynatriumacrylat genannt. Gemäß einem aus der WO 93/18223 bekannten Verfahren können als hochabsorbierende Mittel auch Derivate der Polyacrylsäure verwendet werden. Zur Behandlung der betreffenden Substrate werden diese hochabsorbierenden Mittel in Wasser-in-Öl-Emulsionen eingesetzt, wobei sie in ihrer wässrigen Phase in der jeweiligen Emulsion enthalten sind. Die Herstellung solcher Emulsionen ist jedoch relativ umständlich und aufwendig. Zudem erfordert sie den Zusatz von Emulgatoren. Darüberhinaus weist dieses Verfahren insbesondere auch den Nachteil auf, daß das Öl anschließend beispielsweise durch Verdampfen wieder entfernt werden muß, was häufig mit einer entsprechenden Umweltbelastung einhergeht.

Es sind auch bereits Faser-Thermoplast-Verbundelemente aus synthetischen Fasern als Multifilament- oder Monofilamentfasern basierend auf solchen Materialien wie beispielsweise Glasfasern, Aramid-Fasern, Polyester-Fasern, Polyamid-Fasern, Polypropylen-Fasern, Polyethylen-Fasern, Zylon-Fasern u. a. bekannt geworden. Derartige Verbundmaterialien werden zunehmend insbesondere für eine Zugentlastung in Lichtwellenleiterkabeln verwendet. Hierbei haben sich insbesondere Glasverbundelemente bewährt, nachdem die betreffenden Kabel vor allem auch eventuellen Angriffen von Nagetieren oder tropischen Vögeln standhalten.

Die Verwendung der bisher bekannten Faserverbundelemente in Kabeln ist jedoch mit einer Reihe von Nachteilen verbunden. So müssen die individuellen Elemente, nachdem sie schraubenförmig um den jeweiligen Kabelkörper gewickelt wurden, relativ stark erhitzt werden, um ein Zusammenschmelzen der thermoplastischen Matrix zu erreichen und damit den gesamten Zugentlastungsbereich des Kabels wasserdicht zu machen. Der für eine solche Erhitzung erforderliche Energieaufwand ist beträchtlich. Zudem ist die Produktionsrate entsprechend gering.

Es sind auch bereits thermoplastische, mit wasserblockierenden Quellmitteln vermengte Imprägnierstoffe erhältlich. Es wäre denkbar, Faserverbundelemente mit solchen Imprägnierstoffen zu verwenden, um die erforderliche Wasserdichtigkeit herbeizuführen. Derartige Stoffe sind nun aber sehr teuer, so daß deren wirtschaftliche Anwendung praktisch ausgeschlossen ist.

Es sind auch bereits sogenannte Quellbänder bekannt geworden, die jeweils aus einem gewebten oder nicht gewebten Substrat bestehen, dem ein Quellpulver aus Polyacrylat beigemischt ist. Ein solches Quellband könnte außen auf den Zugentlastungsbereich eines betreffenden Kabels gewickelt werden, um bei in das Kabel eindringendem Wasser unter Bildung einer gelatineartigen Masse aufzuquellen und dadurch die wasserblockierende Wirkung herbeizuführen. Ein derartiges Quellband ist nun aber relativ teuer. Zudem sind in bestimmten Fällen zur Herstellung des jeweiligen Kabels zusätzliche Maßnahmen erforderlich.

Ziel der Erfindung ist es, ein Substrat sowie ein Verfahren der eingangs genannten Art bereitzustellen, mit denen die zuvor genannten Probleme beseitigt sind und die gewünschte wasserblockierende Wirkung auf einfachere und kostengünstigere Weise erzielt werden kann.

Erfindungsgemäß wird diese Aufgabe durch ein Substrat wie insbesondere eine Faser, einen Faserstoff oder eine Folie gelöst, das mit einem Klebstoff imprägniert und an seiner Oberfläche mit einem pulverförmigen wasserblockierenden Mittel beschichtet ist, das durch den Klebstoff an der Substratoberfläche festgelegt ist.

Bei dem erfindungsgemäßen, mit einem Klebstoff imprägnierten und mit einem pulverförmigen wasserblockierenden Mittel beschichteten Substrat kann es sich beispielsweise um eine Faser, einen Faserstoff oder eine Folie handeln. Unter Fasern sind insbesondere endlose Fasern (Filamente) und kurze faserförmige Gebilde, Mikrofasern, Multifilamente und Garne aus kurzen faserförmigen Gebilden, die gesponnen sind, sowie Garne aus endlosen Fasern zu verstehen. Unter Faserstoffen sind beispielsweise aus Fasern hergestellte Produkte in gewebter, gewirkter und nicht gewebter Form einschließlich Vlies, Watte und Filz zu verstehen.

Für die Fasern und Faserstoffe kommen grundsätzlich organische und anorganische Materialien in Frage. Als organischen Fasern können natürliche und synthetische Fasern verwendet werden. Beispiele für natürliche organische Fasern sind Cellulosefasern, Wollfasern und Seidenfasern. Beispiele für synthetische organische Fasern sind Reyonfasern, Fasern aus regenerierter Cellulose, aliphatischen Polyamiden, Aramiden, Polyestern, Polyolefinen, Polyacrylnitrilen, Polyvinylchloriden, Polyvinylalkoholen usw. Beispiele für anorganische Fasern sind Glasfasern, Kohlenstoffasern, Metallfasern, Siliciumdioxidfasern, Keramikfasern, Mineralfasern, Borfasern usw. Von besonderem Interesse sind Glasfasern, Aramidfasern, Nylonfasern, Polyesterfasern, wie Fasern aus Polyethylenterephthalat und Polymethacrylaten, und Cellulosefasern einschließlich aus regenerierter Cellulose.

Grundsätzlich ist es auch möglich, Fasern oder Faserstoffe aus Mischungen beispielsweise der genannten Materialien zu verwenden. Ferner können auch Zweikomponentenfasern verwendet werden, bei denen der Kern aus einem anderen Material besteht als die Ummantelung. Die erfindungsgemäßen Fasern können rund oder abgeflacht sein oder auch eine andere Querschnittsform besitzen, oder es können Hohlfasern sein.

Bei den erfindungsgemäßen Substraten kann es sich somit insbesondere auch um Faserverbundelemente handeln, die zur Erzielung der wasserblockierenden Wirkung entsprechend behandelt wurden. Zudem kann es sich bei dem erfindungsgemäßen Substrat insbesondere auch um ein Quellband handeln, das aufgrund der erfindungsgemäßen Lösung nunmehr äußerst kostengünstig herstellbar ist.

Wie bereits erwähnt können die erfindungsgemäßen Substrate Fasern oder Faserstoffe praktisch beliebiger Art sein und somit insbesondere auch eine Roving-, Garn-, Zwirn-, gewebte oder nicht gewebte Struktur besitzen.

Die Oberfläche eines jeweiligen Substrats ist vorzugsweise mit einem pulverförmigen wasserabsorbierenden Quellmittel als wasserblockierendem Mittel beschichtet.

Als Klebstoff kann beispielsweise ein Klebemittel auf Wasser-, Lösungsmittel- oder Wachsbasis verwendet werden. Von besonderem Vorteil ist, wenn das Substrat mit einem thermoplastischen oder Heißschmelzklebstoff imprägniert ist.

Bei einer in der Praxis bevorzugten Ausführungsform ist das Substrat, bezogen auf das Trockengewicht des unbehandelten Substrats, mit etwa 25 Gew.-% Klebstoff imprägniert.

Von besonderem Vorteil ist, wenn das Substrat an seiner Oberfläche mit einem Galactomannan, insbesondere einem Polygalactomannan, als wasserblockierendem Mittel beschichtet ist. Als Polygalactomannan kann Carubin oder Guaran verwendet werden, wobei das bevorzugte Guaran insbesondere in Form von Guar-Mehl eingesetzt wird.

Die erfindungsgemäßen Substrate besitzen eine ausgezeichnete wasserblockierende Wirkung, da das auf die Substratoberfläche aufgebrachte, durch den Klebstoff an dieser festgelegte pulverförmige, wasserblockierende Mittel bei einem Eindringen von Wasser aufquillt, wodurch ein weiteres Vordringen des Wassers längs der Fasern zuverlässig verhindert wird. Dabei werden die mechanischen Eigenschaften des Substrats durch das darauf abgelagerte wasserblockierende Mittel nicht beeinträchtigt. Da beispielsweise mit relativ geringen Mengen Polygalactomannan auf der Oberfläche des Substrats eine gute wasserblockierende Wirkung erzielt wird, nehmen Gewicht und Volumen des Substrats nur unwesentlich zu, so daß die Anwendungsmöglichkeiten der beschichteten Substrate gegenüber den unbeschichteten Substraten praktisch nicht eingeschränkt sind. Zudem handelt es sich insbesondere bei den Polygalactomannanen um umweltfreundliche Substanzen.

Die erfindungsgemäßen Substrate sind u.a. zur Herstellung von elektrischen und/oder optischen Kabeln wie insbesondere Lichtwellenleiterkabeln für eine optische Nachrichtenübertragung geeignet. Für diesen Zweck werden als Substrate beispielsweise Multifilamente aus Glas als Zugentlastungs- oder Verstärkungsfasern verwendet. Grundsätzlich können die erfindungsgemäßen Substrate jedoch auch für andere Zwecke verwendet werden, bei denen eine entsprechende wasserblockierende Wirkung gewährleistet sein soll. So ist beispielsweise auch eine Verwendung zur Herstellung von Fahrzeugreifen denkbar.

Beim zur Lösung der zuvor genannten Aufgabe vorgesehenen erfindungsgemäßen Verfahren zur Behandlung von Substraten wie insbesondere einer Faser, eines Faserstoffes oder einer Folie mit einem wasserblockierendem Mittel wird das Substrat mit einem Klebstoff imprägniert und anschließend das wasserblockierende Mittel in Pulverform auf die Substratoberfläche aufgebracht, an der dieses aufgrund des Klebstoff haften bleibt.

Bevorzugt wird, wie oben bereits angegeben, auf die Substratoberfläche als wasserblockierendes Mittel ein wasserabsorbierendes Quellmittel aufgebracht.

Bei einer in der Praxis bevorzugten Ausführungsform des erfindungsgemäßen Verfahrens wird das auf die Substratoberfläche aufzubringende pulverförmige wasserblockierende Mittel durch ein strömendes Gas oder Gasgemisch, insbesondere durch eine Luftströmung, in einen Schwebezustand versetzt. Das zuvor mit dem Klebstoff imprägnierte Substrat wird durch das in einen Schwebezustand versetzte pulverförmige wasserblockierende Mittel geführt. Zweckmäßigerweise wird das pulverförmige wasserblockierende Mittel durch eine in einer Pulverkammer erzeugte rotierende Gasströmung in dem Schwebezustand gehalten und das zuvor mit dem Klebstoff imprägnierte Substrat durch die Pulverkammer geführt.

Wird das Substrat mit einem thermoplastischen oder Heißschmelzklebstoff imprägniert, so wird der Klebstoff zum Imprägnieren des Substrats erhitzt. Das pulverförmige wasserblockierende Mittel wird dann zweckmäßigerweise auf die Substratoberfläche aufgebracht, bevor der Klebstoff abgekühlt ist und seine Haftwirkung verliert. Alternativ kann der thermoplastische oder Heißschmelzklebstoff nach einem Imprägnieren des Substrats auch durch erneutes Erhitzen reaktiviert werden, bevor das pulverförmige wasserblockierende Mittel auf die Substratoberfläche aufgebracht wird.

Gemäß einer in der Praxis bevorzugten Ausführungsform des erfindungsgemäßen Verfahrens wird das Substrat, bezogen auf das Trockengewicht des unbehandelten Substrats, mit etwa 25 Gew.-% Klebstoff imprägniert.

Um einen möglichst genau definierten Klebstoffanteil sicherzustellen, ist es von Vorteil, wenn das Substrat zunächst mit dem Klebstoff imprägniert und anschließend durch eine Eichdüse geführt wird, mit der schließlich der gewünschte, auf das Trockengewicht des unbehandelten Substrat bezogene Klebstoffanteil herbeigeführt wird.

Vorzugsweise wird, wie bereits erwähnt, die Substratoberfläche mit einem Galactomannan, insbesondere einem Polygalactomannan, als wasserblockierendem Mittel beschichtet. Als Polygalactomannan kann wieder Carubin oder Guaran verwendet werden, wobei das bevorzugte Guaran insbesondere in Form von Guar-Mehl eingesetzt wird.

Insbesondere im Zusammenhang mit zur Kabelherstellung bestimmten Verbundelementen wie beispielsweise Glas- oder Aramid-Verbundelementen ist es von Vorteil, wenn das Substrat im Anschluß an das Aufbringen des pulverförmigen wasserblockierenden Mittels auf die Substratoberfläche auf einer Seite stärker abgekühlt wird als auf der gegenüberliegenden Seite. Dazu kann beispielsweise in dem Fall, daß ein jeweiliges Verbundelement über Zug- und Kühlrollen geführt wird, das Verbundelement im Anschluß an die erste Rolle um 180° gedreht werden, bevor es über die zweite Rolle geführt wird. Dadurch erhält es eine zumindest im wesentlichen ovale Form, wodurch eine hohe Packungsdichte der verschiedenen im herzustellenden Kabel unterzubringenden Verbundelemente erreicht wird, nachdem der Rand eines jeweiligen Elements über den Rand eines jeweils benachbarten Elements gleiten kann und entsprechend eine dichte zusammenhängende, den Kabelkörper umgebende Hülle gebildet wird.

Die gekühlten, mit dem wasserblockierenden Mittel versehenen ovalen Verbundelemente können dann direkt aufgespult und in Form kundenspezifischer Spulen bereitgestellt und ausgeliefert werden.

Insbesondere auch im Fall derartiger, beispielsweise mit einem Polygalactomannan als wasserblockierendem Mittel versehenen Verbundelementen erweist es sich als Vorteil, daß die Elemente zur Erzielung der wasserblockierenden Wirkung nicht besonders erhitzt werden müssen, wodurch in großem Umfang Energie eingespart wird. Zudem wird eine deutlich höhere Produktionsrate erzielt.

Wie bereits erwähnt kann das erfindungsgemäße Verfahren auch zur Behandlung beliebiger anderer Substrate angewendet werden.

Zudem kann das erfindungsgemäße Verfahren direkt in einen kontinuierlichen Betrieb zur Herstellung des Substrats integriert werden oder separat beispielsweise von einem Spinnverfahren durchgeführt werden. Bei einem integrierten Betrieb können beispielsweise Fasern nach dem Spinnen, Waschen und Trocknen direkt einer der entsprechenden Behandlung der Fasern dienenden Einheit zugeführt werden.

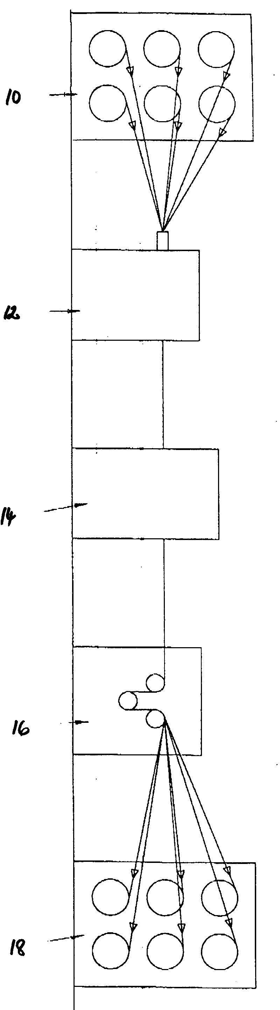

Das erfindungsgemäße Verfahren wird anhand eines Ausführungsbeispiels unter Bezugnahme auf die Zeichnung näher erläutert.

Deren einzige Figur zeigt in Form einer Prinzipskizze eine Abwickelmaschine 10, eine Klebstoffeinheit 12, eine Pulverkammer 14, Zug- und Kühlrollen 16 sowie eine Spulmaschine 18.

In der Abwickelmaschine 10 werden mehrere Glasrovings (1200 tex vom Typ PPG) von einer entsprechenden Anzahl von Spulen abgewickelt. Die einzelnen Rovings bestehen aus einer großen Anzahl von Einzelfilamenten mit einem jeweiligen Durchmesser von 0,012 bis 0,02 mm. Beim Abwickeln werden die Glasrovings in definierter Weise abgebremst (etwa 3 g per tex).

Anschließend werden die gebildeten Glasrovingbündel der Klebstoffeinheit 12 zugeführt, in der ein Klebstoff vom Typ Technomelt Q5303 (Fabrikat Henkel) aufgetragen wird.

In der Klebstoffeinheit 12 wird eine Heißkleber-Pumpe (Fabrikat Nordson) verwendet, durch die der Technomelt-Klebstoff aufgeschmolzen und in eine elektrisch beheizte Wanne gepumpt wird. In der Wanne ist eine ölbeheizte Walze angeordnet, die teilweise in den heißen Technomelt-Klebstoff eingetaucht ist. Die Glasrovingbündel werden nun über die ölbeheizte Walze geführt, die sich mit einer Geschwindigkeit dreht, die etwa 5 % geringer als die Geschwindigkeit ist, mit der die einzelnen Glasrovingbündel über die Walze geführt werden. Dadurch wird erreicht, daß sich die Glasrovingbündel öffnen und demzufolge eine durchgehende Imprägnierung mit dem Technomelt-Klebstoff möglich ist.

Im Anschluß an die Walze werden die einzelnen Glasrovingbündel mit dem Technomelt-Klebstoff imprägniert und über eine unten liegende sowie über eine oben liegende Stange geführt, wodurch der größte Teil überschüssigen Technomelt-Klebestoffs abgetragen wird und in die Imprägnierwanne zurückläuft. Im Anschluß an die zwei Stangen werden die von überschüssigem Klebstoff befreiten imprägnierten Glasrovingbündel durch eine Eichdüse geführt. Dabei können, je nach den gewünschten Dimensionen einzelne Bündel nacheinander oder mehrere Bündel zusammen durch ein und dieselbe Eichdüse geführt werden. Durch die Eichdüse wird sichergestellt, daß das Glasfasersubstrat, bezogen auf das Trockengewicht des unbehandelten Substrats, mit etwa 25 Gew.-% Technomelt-Klebstoff imprägniert wird.

Der Öffnungsquerschnitt der Eichdüse kann entweder rund oder flach sein oder auch irgend eine andere Form besitzen. Beim vorliegenden Ausführungsbeispiel ist ein Durchmesser von 1,2 mm vorgesehen, wobei durch die Düse zwei 1200 tex mit Technomelt-Klebstoff imprägnierte Bündel hindurchgeführt werden. Damit erhält man schließlich ein 2400 tex mit Technomelt-Klebstoff imprägniertes Glasfaser-Technomelt-Verbundelement.

Im Anschluß an die Eichdüse wird das Verbundelement in die Pulverkammer 14 geführt, in der pulverförmiges Polygalactomannan durch einen rotierenden Luftstrom in der Schwebe gehalten wird. Da die Oberfläche des Verbundelements noch nicht abgekühlt ist, ist diese noch stark klebend. Demzufolge werden die in der Schwebe gehaltenen Galactomannan-Partikel vom Verbundelement aufgefangen, woraufhin diese sich auf der Oberfläche des Elements festsetzen.

Im Anschluß daran wird das Verbundelement zu Zug- und Kühlrollen 16 geführt. Nachdem das Verbundelement auf der ersten Rolle gekühlt ist, wird es um 180° gedreht, bevor es über die nächste Rolle geführt wird, so daß es im wesentlichen nur auf einer Seite gekühlt wird. Dadurch erhält das Verbundelement eine zumindest im wesentlichen ovale Form, wodurch für die im herzustellenden Kabel unterzubringenden Verbundelemente eine hohe Packungsdichte erreicht wird, nachdem der Rand eines jeweiligen Verbundelements über den Rand eines jeweils benachbarten Verbundelements gleitet, so daß sich eine den Kabelkörper umgebende dichte zusammenhängende Hülle ergibt.

Die mit einem Polygalactomannan beschichteten und anschließend gekühlten ovalen Glasverbundelemente werden dann der Spulmaschine 18 zugeführt, in der sie aufgespult werden, um jeweilige kundenspezifische Spulen zu erzeugen.

Die Verwendung von mit einem Polygalactomannan beschichteten ovalen Glasverbundelementen bringt u. a. den Vorteil mit sich, daß die Elemente nicht mehr erhitzt werden müssen, um die gewünschte wasserblockierende Wirkung zu erzielen. Abgesehen von dem entsprechend geringeren Energieverbrauch wird auch eine wesentlich höhere Produktionsrate erzielt. Die bisher zur Erhitzung solcher Elemente erforderlichen aufwendigen Maßnahmen entfallen vollständig.

## Patentansprüche

1. Substrat wie insbesondere eine Faser, ein Faserstoff oder eine Folie, das mit einem Klebstoff imprägniert und an seiner Oberfläche mit einem pulverförmigen wasserblockierenden Mittel beschichtet ist, das durch den Klebstoff an der Substratoberfläche festgelegt ist.

2. Substrat nach Anspruch 1, dessen Oberfläche mit einem pulverförmigen wasserabsorbierenden Quellmittel als wasserblockierendem Mittel beschichtet ist.

3. Substrat nach Anspruch 1 oder 2, das mit einem thermoplastischen oder einem Heißschmelzklebstoff imprägniert ist.

4. Substrat nach einem der vorhergehenden Ansprüche, das bezogen auf das Trockengewicht des unbehandelten Substrats mit etwa 25 Gew.-% Klebstoff imprägniert ist.

5. Substrat nach einem der vorhergehenden Ansprüche, das an seiner Oberfläche mit einem Galactomannan, insbesondere einem Polygalactomannan, als wasserblockierendem Mittel beschichtet ist.

6. Substrat nach Anspruch 5, das an seiner Oberfläche mit Guar-Mehl beschichtet ist.

7. Verfahren zum Behandeln von Substraten wie insbesondere einer Faser, eines Faserstoffes oder einer Folie mit einem wasserblockierenden Mittel, bei dem das Substrat mit einem Klebstoff imprägniert wird und anschließend das wasserblockierende Mittel in Pulverform auf die Substratoberfläche aufgebracht wird, an der es aufgrund des Klebstoffs haften bleibt.

8. Verfahren nach Anspruch 7, bei dem auf die Substratoberfläche als wasserblockierendes Mittel ein wasserabsorbierendes Quellmittel aufgebracht wird.

9. Verfahren nach Anspruch 7 oder 8, bei dem das auf die Substratoberfläche aufzubringende pulverförmige wasserblockierende Mittel durch ein strömendes Gas oder Gasgemisch, insbesondere durch eine Luftströmung, in einen Schwebezustand versetzt und das zuvor mit dem Klebstoff imprägnierte Substrat durch das in den Schwebezustand versetzte pulverförmige wasserblockierende Mittel geführt wird.

10. Verfahren nach Anspruch 9, bei dem das pulverförmige wasserblockierende Mittel durch eine in einer Pulverkammer erzeugte rotierende Gasströmung in dem Schwebezustand gehalten und das zuvor mit dem Klebstoff imprägnierte Substrat durch die Pulverkammer geführt wird.

11. Verfahren nach einem der Ansprüche 7 bis 10, bei dem das Substrat mit einem thermoplastischen oder Heißschmelzklebstoff imprägniert wird.

12. Verfahren nach Anspruch 11, bei dem der thermoplastische oder Heißschmelzklebstoff zum Imprägnieren des Substrats erhitzt und das pulverförmige wasserblockierende Mittel auf die Substratoberfläche aufgebracht wird, bevor der Klebstoff abgekühlt ist und seine Haftwirkung verliert.

13. Verfahren nach Anspruch 11, bei dem das Substrat mit dem thermoplastischen oder Heißschmelzklebstoff imprägniert und der Klebstoff danach durch erneutes Erhitzen reaktiviert wird, bevor das pulverförmige wasserblockierende Mittel auf die Substratoberfläche aufgebracht wird.

14. Verfahren nach einem der vorhergehenden Ansprüche, bei dem das Substrat, bezogen auf das Trockengewicht des unbehandelten Substrats, mit etwa 25 Gew.-% Klebstoff imprägniert wird.

15. Verfahren nach einem der vorhergehenden Ansprüche, bei dem das Substrat zunächst mit dem Klebstoff imprägniert und anschließend durch eine Eichdüse geführt wird, mit der schließlich der gewünschte, auf das Trockengewicht des unbehandelten Substrats bezogene Klebstoffanteil herbeigeführt wird.

16. Verfahren nach einem der vorhergehenden Ansprüche, bei dem die Substratoberfläche mit einem Galactomannan, insbesondere einem Polygalactomannan, als wasserblockierendem Mittel beschichtet wird.

17. Verfahren nach Anspruch 16, bei dem die Substratoberfläche das mit Guar-Mehl beschichtet wird.

18. Verfahren nach einem der vorhergehenden Ansprüche, bei dem das Substrat im Anschluß an das Aufbringen des pulverförmigen wasserblockierenden Mittels auf die Substratoberfläche auf einer Seite stärker abgekühlt wird als auf der gegenüberliegenden Seite.
